# EUROPEAN PATENT APPLICATION

(11) **EP 3 148 272 A1**
(43) Date of publication of application: **29.03.2017**
(21) Application number: 14892541.5
(22) Date of filing: 05.09.2014
(51) Int. Cl.: H04W 72/04

(54) **SCHEDULING, TRANSMISSION METHOD, AND BASE STATION, TERMINAL AND SYSTEM THEREOF**

(30) Priority: 22.05.2014 CN 201410220435
(71) Applicant: ZTE Corporation, Shenzhen, Guangdong 518057 (CN)
(72) Inventor: WANG, Lei, Shenzhen Guangdong 518057 (CN)
(74) Representative: Novagraaf Technologies
(86) International application number: PCT/CN2014/086065
(87) International publication number: WO 2015/176418

(57) **Abstract**

The disclosure discloses a scheduling method and system, a terminal, a sending method, a base station and a scheduling method for the base station. The scheduling method for a base station, provided by the disclosure, includes that: after uplink Semi-Persistence Scheduling (SPS) is activated, response to an uplink Scheduling Request (SR) initiated by a terminal is refused; a Buffer Status Reporting (BSR) sent by the terminal at an uplink SPS period point is acquired; and according to the BSR, a service of the terminal is dynamically scheduled. The method of the disclosure can improve a stability of an uplink SPS service and reduce resource waste.

## Description

### Technical Field

The disclosure relates to the technical field of mobile communications, and in particular to a scheduling method and system, a terminal, a sending method, a base station and a scheduling method for the base station.

### Background

At present, a mobile communication system generally adopts a shared resource allocation scheduling mode, which is advantageous to be capable of greatly utilizing wireless communication resources. For this scheduling mode, an original voice service of a circuit domain has been cancelled, and a Voice over Internet Protocol (VoIP) service of a data domain is adopted instead. However, because the quantity of voice users is often relatively large, the shared scheduled resource allocation mode needs to send relevant control information to each transmission, so a overhead of the control information is over-high. For these real-time services in which data packet sizes are relatively fixed and arrival time intervals meet a certain rule, the overhead of the control information can be reduced by adopting a Semi-Persistence Scheduling (SPS) technology.

SPS refers to a scheduling method which is designed for a specific service, uses pre-allocated resources at a fixed moment and adopts a dynamic scheduling (retransmission) mechanism at other moments. Specifically, after the SPS is started, at least one appointed resource block will be periodically allocated to an appointed user so as to adapt to some periodic services with fixed effective load sizes, so as to reduce system overheads brought by information such as resource allocation and indication. SPS data retransmission adopts a dynamic scheduling method, and therefore it is called as the SPS. Generally, a VoIP service relatively conforms to the SPS.

In a Long Term Evolution (LTE) system, when a User Equipment (UE) does not have effective resources for data transmission and the UE has a service to be transmitted, the UE will actively initiate an uplink Scheduling Request (SR) to a base station, in order to apply for effective and legal uplink transmission resources. Generally, after the UE initiates an SR, the base station will authorize resources, with certain sizes, to the UE in response to the SR initiated by the UE, in order to allow the UE to report a size of a data volume to be transmitted in an buffer of the UE to the base station. That is, a Buffer Status Reporting (BSR) is reported to the base station, and then, after obtaining the BSR of the UE, the base station will schedule the UE.

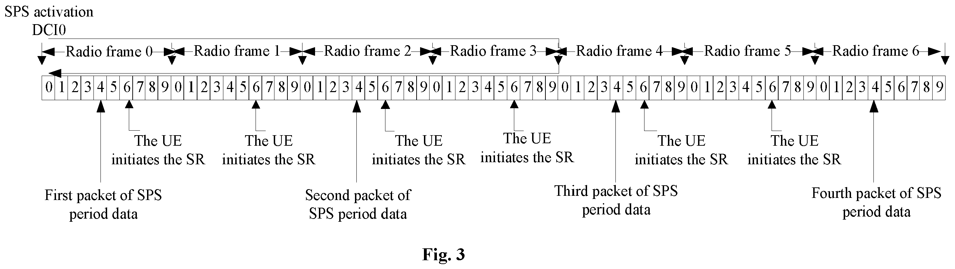

When uplink SPS is activated, the base station activates an SPS service by sending Downlink Control Information format 0 (DCI0), containing specific information, to the UE. When the UE identifies the DCI0 for activating the SPS, the UE stores current scheduling information, and sends SPS service data using pre-configured time-frequency resources in accordance with SPS configurations at a fixed period. If the UE suddenly has a voice service or other data services at a non-SPS period point and does not have uplink legal resources, the UE will initiate the SR. In this case, if special processing is not carried out, the base station will schedule the SR in response to the SR. At this time, the UE will probably upload at least one data block at an uplink resource position, authorized by the base station, of the non-SPS period point, and the UE will package higher-priority VoIP services to be scheduled in advance in a dynamically authorized transmission block during packaging. So, because the UE schedules VoIP data in advance at a next-time SPS scheduling period point, VoIP services to be transmitted will not probably exist in the buffer of the UE, which causes transmission of only padding at the SPS period point. Moreover, VoIP services are periodic services, so a scenario where the padding instead of effective data exists at the SPS period point due to scheduling of the VoIP services in advance caused by SR scheduling will be periodically caused, as shown in Fig. 3.

Meanwhile, uplink SPS in the LTE system has an implicit de-activation flow, wherein implicit de-activation refers to that when the UE sends SDU-empty data packets at N successive SPS period points, the UE will release SPS configurations of the UE, that is, there are no fixed time-frequency resources for data uploading. In conjunction with the SR scheduling in the SPS and the implicit de-activation of the uplink SPS, it will be discovered that if the base station responds to the SR after the SPS is activated, frequent implicit de-activation and activation of the UE will be probably caused, and a stability of an uplink SPS service is certainly influenced. Moreover, due to response to the SR, certain resources are wasted.

### Summary

The embodiments of disclosure provide a scheduling method and system, a terminal, a sending method, a base station and a scheduling method for the base station, so as to at least solve problems of poor stability of an uplink SPS service and resource waste in the related art.

In order to solve the technical problems, one embodiment of the disclosure provides a scheduling method for a base station, which may include the steps as follows.

After uplink SPS is activated, response to an uplink SR initiated by a terminal is refused. A BSR sent by the terminal at an uplink SPS period point is acquired.

According to the BSR, a service of the terminal is dynamically scheduled.

Optionally, the method may further include that:
after uplink SPS is de-activated, response to the uplink SR initiated by the terminal is restored, and a resource is configured for the terminal;
a BSR sent by the terminal by means of the resource is acquired; and
according to the BSR sent by the terminal by means of the resource, the service of the terminal is dynamically scheduled.

Optionally, the step that the BSR sent by the terminal at the uplink SPS period point is acquired may include that: the BSR is acquired by means of a service data packet uploaded by the terminal at the uplink SPS period point.

Similarly, in order to solve the technical problems, another embodiment of the disclosure also provides another scheduling method for a base station, which may include the steps as follows.

After uplink SPS is activated, a BSR sent by a terminal at an uplink SPS period point is acquired.

According to the BSR, a service of the terminal is dynamically scheduled.

Optionally, the method may further include that:
after uplink SPS is de-activated, response to an uplink SR initiated by the terminal is made, and a resource is configured for the terminal;
a BSR sent by the terminal by means of the resource is acquired; and
according to the BSR sent by the terminal by means of the resource, the service of the terminal is dynamically scheduled.

Optionally, the step that the BSR sent by the terminal at the uplink SPS period point is acquired may include that: the BSR is acquired by means of a service data packet uploaded by the terminal at the uplink SPS period point.

Similarly, in order to solve the technical problems, another embodiment of the disclosure also provides a sending method, which may include the steps as follows.

After uplink SPS is activated, a terminal stops initiating an uplink SR to a base station.

The terminal sends a BSR of the terminal to the base station at an uplink SPS period point.

Optionally, the method may further include that:
after uplink SPS is de-activated, the terminal restores to initiate the uplink SR to the base station; and
the terminal sends the BSR of the terminal to the base station by means of a resource configured for the terminal by the base station in response to the uplink SR.

Optionally, the step that the terminal sends the BSR of the terminal to the base station at the uplink SPS period point may include that: the terminal sends the BSR to the base station at the uplink SPS period point by means of an uploaded service data packet.

Similarly, in order to solve the technical problems, another embodiment of the disclosure also provides another sending method, which may include the steps as follows.

After uplink SPS is activated, a terminal initiates an uplink SR to a base station.

The terminal sends a BSR of the terminal to the base station at an uplink SPS period point.

Optionally, the method may further include that: after uplink SPS is de-activated, the terminal sends the BSR of the terminal to the base station by means of a resource configured for the terminal by the base station in response to the uplink SR.

Optionally, the step that the terminal sends the BSR of the terminal to the base station at the uplink SPS period point may include that: the terminal sends the BSR to the base station at the uplink SPS period point by means of an uploaded service data packet.

Similarly, in order to solve the technical problems, another embodiment of the disclosure also provides a scheduling method, which may include the steps as follows.

After uplink SPS is activated, a terminal initiates an uplink SR to a base station.

The base station refuses to respond to the uplink SR initiated by the terminal.

The terminal sends a BSR of the terminal to the base station at an uplink SPS period point.

The base station acquires the BSR sent by the terminal, and dynamically schedules a service of the terminal according to the acquired BSR.

Optionally, the method may further include that:
after uplink SPS is de-activated, the base station restores to respond to the uplink SR initiated by the terminal, and configures a resource for the terminal;
the terminal sends the BSR of the terminal to the base station by means of the resource; and
the base station dynamically schedules the service of the terminal according to the BSR sent by the terminal by means of the resource.

Optionally, the step that the terminal sends the BSR of the terminal to the base station at the uplink SPS period point may include that: the terminal sends the BSR of the terminal to the base station at the uplink SPS period point by means of a service data packet uploaded at the period point.

Similarly, in order to solve the technical problems, another embodiment of the disclosure also provides another scheduling method, which may include the steps as follows.

After uplink SPS is activated, a terminal stops initiating an uplink SR to a base station.

The terminal sends a BSR of the terminal to the base station at an uplink SPS period point.

The base station acquires the BSR sent by the terminal, and dynamically schedules a service of the terminal according to the acquired BSR.

Optionally, the method may further include that:
after uplink SPS is de-activated, the terminal restores to initiate the uplink SR to the base station;
the base station responds to the uplink SR, and configures a resource for the terminal;
the terminal sends the BSR of the terminal to the base station by means of the resource; and
the base station dynamically schedules the service of the terminal according to the BSR sent by the terminal by means of the resource.

Optionally, the step that the terminal sends the BSR of the terminal to the base station at the uplink SPS period point may include that:
the terminal sends the BSR of the terminal to the base station at the uplink SPS period point by means of a service data packet uploaded at the period point.

Similarly, in order to solve the technical problems, another embodiment of the disclosure also provides a base station, which may include: a request response component, an information acquisition component and a scheduling component, wherein
the request response component is configured to refuse, after uplink SPS is activated, to respond to an uplink SR initiated by a terminal;
the information acquisition component is configured to acquire a BSR sent by the terminal at an uplink SPS period point; and
the scheduling component is configured to dynamically schedule, according to the BSR, a service of the terminal.

Optionally, the request response component may be further configured to restore, after uplink SPS is de-activated, to respond to the uplink SR initiated by the terminal, and configure a resource for the terminal;
the information acquisition component may be further configured to acquire the BSR sent by the terminal by means of the resource; and
the scheduling component may be further configured to dynamically schedule, according to the BSR sent by the terminal by means of the resource, the service of the terminal.

Optionally, the information acquisition component may be configured to acquire the BSR by means of a service data packet uploaded by the terminal at the uplink SPS period point.

Similarly, in order to solve the technical problems, another embodiment of the disclosure also provides another base station, which may include: an information acquisition component and a scheduling component, wherein
the information acquisition component is configured to acquire, after uplink SPS is activated, a BSR sent by a terminal at an uplink SPS period point; and
the scheduling component is configured to dynamically schedule, according to the BSR, a service of the terminal.

Optionally, the base station may further include: a request response component, wherein
the request response component is configured to respond, after uplink SPS is de-activated, to an uplink SR initiated by the terminal, and configure a resource for the terminal;
the information acquisition component is further configured to acquire a BSR sent by the terminal by means of the resource; and
the scheduling component is further configured to dynamically schedule, according to the BSR sent by the terminal by means of the resource, the service of the terminal.

Optionally, the information acquisition component may be configured to acquire the BSR by means of a service data packet uploaded by the terminal at the uplink SPS period point.

Similarly, in order to solve the technical problems, another embodiment of the disclosure also provides a terminal, which may include: a request component and an information sending component, wherein
the request component is configured to stop, after uplink SPS is activated, initiating an uplink SR to a base station; and
the information sending component is configured to send a BSR of the terminal to the base station at an uplink SPS period point.

Optionally, the request component may be further configured to restore, after uplink SPS is de-activated, to initiate the uplink SR to the base station; and
the information sending component may be further configured to send the BSR of the terminal to the base station by means of a resource configured for the terminal by the base station in response to the uplink SR.

Optionally, the information sending component may be configured to send the BSR to the base station at the uplink SPS period point by means of an uploaded service data packet.

Similarly, in order to solve the technical problems, another embodiment of the disclosure also provides another terminal, which may include: a request component and an information sending component, wherein
the request component is configured to initiate, after uplink SPS is activated, an uplink SR to a base station; and
the information sending component is configured to send a BSR of the terminal to the base station at an uplink SPS period point.

Optionally, the information sending component may be further configured to send, after uplink SPS is de-activated, the BSR of the terminal to the base station by means of a resource configured for the terminal by the base station in response to the uplink SR.

Optionally, the information sending component may be configured to send the BSR to the base station at the uplink SPS period point by means of an uploaded service data packet.

Similarly, in order to solve the technical problems, another embodiment of the disclosure also provides a scheduling system, which may include a terminal and a base station, wherein
the terminal includes: a request component and an information sending component;
the base station includes: a request response component, an information acquisition component and a scheduling component;
the request component is configured to initiate, after uplink SPS is activated, an uplink SR to the base station;
the request response component is configured to refuse to respond to the uplink SR initiated by the terminal;
the information sending component is configured to send a BSR of the terminal to the base station at an uplink SPS period point;
the information acquisition component is configured to acquire the BSR sent by the terminal; and
the scheduling component is configured to dynamically schedule, according to the acquired BSR, a service of the terminal.

Optionally, the request response component may be further configured to restore, by the base station, to respond to the uplink SR initiated by the terminal after uplink SPS is de-activated, and configure a resource for the terminal; and
the information sending component may be further configured to send the BSR of the terminal to the base station by means of the resource.

Optionally, the information sending component may be configured to send the BSR of the terminal to the base station at the uplink SPS period point by means of a service data packet uploaded at the period point.

Similarly, in order to solve the technical problems, another embodiment of the disclosure also provides another scheduling system, which may include a terminal and a base station, wherein
the terminal includes: a request component and an information sending component;
the base station includes: an information acquisition component and a scheduling component;
the request component is configured to stop, after uplink SPS is activated, initiating an uplink SR to a base station;
the information sending component is configured to send a BSR of the terminal to the base station at an uplink SPS period point;
the information acquisition component is configured to acquire the BSR sent by the terminal; and
the scheduling component is configured to dynamically schedule, according to the acquired BSR, a service of the terminal.

Optionally, the base station may further include: a request response component, wherein
the request component is further configured to restore, after uplink SPS is de-activated, to initiate the uplink SR to the base station;
the request response component is configured to respond to the uplink SR, and configure a resource for the terminal; and
the information sending component is further configured to send the BSR of the terminal to the base station by means of the resource.

Optionally, the information sending component may be configured to send the BSR of the terminal to the base station at the uplink SPS period point by means of a service data packet uploaded at the period point.

The embodiments of the disclosure have beneficial effects as follows.

The disclosure provides a scheduling method and system, a terminal, a sending method, a base station and a scheduling method for the base station, capable of improving the stability of an uplink SPS service and reducing resource waste. The scheduling method for the base station, provided by the disclosure, includes that: after the uplink SPS is activated, response to the uplink SR initiated by the terminal is refused; the BSR sent by the terminal at the uplink SPS period point is acquired; and according to the BSR, the service of the terminal is dynamically scheduled. According to the scheduling method of the disclosure, after the uplink SPS is activated, the BSR sent by the terminal at the uplink SPS period point is acquired, and dynamic scheduling is performed according to the BSR, thereby avoiding the problem that the UE sends the empty data packet due to the SR response at the non-uplink SPS period point, and improving the stability of the uplink SPS service. Resources of a system can be saved due to no SR response after the uplink SPS is activated. Compared with the related art, the methods of the disclosure improve the quality of the uplink SPS service.

### Brief Description of the Drawings

Fig. 1 is a flowchart of a scheduling method for a base station according to a first embodiment of the disclosure;
Fig. 2 is a flowchart of a scheduling method for a base station, after uplink SPS is de-activated, according to a first embodiment of the disclosure;
Fig. 3 is a working schematic diagram of a base station, after uplink SPS is activated, according to a first embodiment of the disclosure;
Fig. 4 is a working schematic diagram of a base station, after uplink SPS is activated, according to a second embodiment of the disclosure;
Fig. 5 is a working schematic diagram of another base station, after uplink SPS is activated, according to a second embodiment of the disclosure;
Fig. 6 is a working schematic diagram of a base station, after uplink SPS is activated, according to a third embodiment of the disclosure;
Fig. 7 is a flowchart of a scheduling method for a base station according to a fourth embodiment of the disclosure;
Fig. 8 is a working schematic diagram of a base station, after uplink SPS is activated, according to a fourth embodiment of the disclosure;
Fig. 9 is a flowchart of a sending method according to a fifth embodiment of the disclosure;
Fig. 10 is a flowchart of a sending method according to a sixth embodiment of the disclosure;
Fig. 11 is a working schematic diagram of a UE, after uplink SPS is activated, according to a sixth embodiment of the disclosure;
Fig. 12 is a flowchart of a scheduling method according to a seventh embodiment of the disclosure;
Fig. 13 is a flowchart of a scheduling method according to an eighth embodiment of the disclosure;
Fig. 14 is a structural schematic diagram of a base station according to a ninth embodiment of the disclosure;
Fig. 15 is a structural schematic diagram of another base station according to a ninth embodiment of the disclosure;
Fig. 16 is a structural schematic diagram of a terminal according to a tenth embodiment of the disclosure;
Fig. 17 is a structural schematic diagram of a scheduling system according to an eleventh embodiment of the disclosure; and
Fig. 18 is a structural schematic diagram of another scheduling system according to an eleventh embodiment of the disclosure.

### Detailed Description of the Embodiments

In conventional uplink SPS, problems of instability of an uplink SPS service and resource waste caused by SR response at a non-SPS period point exist. Thus, the embodiments of disclosure provide a scheduling method and system, a terminal, a sending method, a base station and a scheduling method for the base station, capable of improving the stability of the uplink SPS service and reducing resource waste. The core idea of the disclosure lies in that: a BSR information is not sent by means of the SR response at the non-SPS period point after the uplink SPS is activated, and a BSR is sent to a base station at an SPS period point; and because the SR response is no longer made after the uplink SPS is activated and the BSR is sent at the SPS period point, a service can be sent, and the technical problems are avoided.

The disclosure will be further illustrated below by means of specific implementations in conjunction with the drawings in detail.

### Embodiment 1:

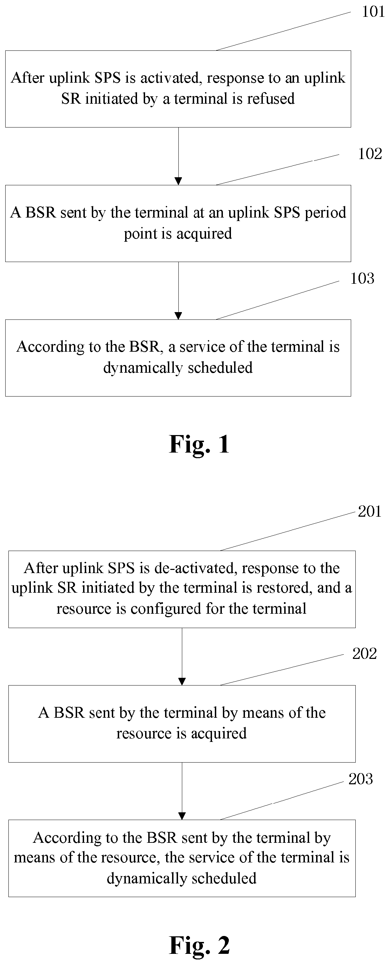

As shown in Fig. 1, the embodiment provides a scheduling method for a base station, which specifically includes the steps as follows.
Step 101: After uplink SPS is activated, response to an uplink SR initiated by a terminal is refused.
   In the embodiment, the base station activates uplink SPS by sending DCI0 to a UE; after the uplink SPS is activated, the terminal will initiate an SR to the base station as needed (for example, when an SR period point is reached or other pieces of data suddenly appear); and the method of the embodiment no longer responds to the terminal initiating the SR after uplink SPS is activated.
Step 102: The BSR sent by the terminal at an uplink SPS period point is acquired.
   After uplink SPS is activated, if other data services appear, the SR is initiated to the base station so as to request for a resource generally in the related art. Specifically, the base station responds to the SR, configures a resource, uploading the BSR, for the terminal, and then schedules these data services according to the BSR. In the method of the embodiment, a mode of acquiring the BSR by means of SR response is avoided, and the terminal actively sends the BSR to the base station at the uplink SPS period point instead. In the embodiment, the BSR is sent at the uplink SPS period point because the terminal uploads a higher-priority VoIP service packet to the base station using pre-configured video resources at a period point in the uplink SPS, such that a situation of transmission of only padding at the SPS period point caused by a fact that the terminal will upload a higher-priority service packet to the base station after the base station schedules the terminal when receiving the BSR is avoided, thereby improving the stability of the uplink SPS service. The uplink SPS period point of the embodiment is determined by pre-set configuration information about uplink SPS. The pre-set configuration information includes an interval-fixed period and a pre-set time-frequency resource, and after uplink SPS is activated, the terminal sends service data at the interval-fixed period using the pre-set time-frequency resource.
   In an example embodiment, in the scheduling method of the embodiment, the BSR can be carried by a service data packet uploaded at the uplink SPS period point and is sent to the base station. So, the scheduling method for the base station of the embodiment can acquire the BSR by means of the service data packet uploaded by the terminal at the uplink SPS period point.
Step 103: According to the BSR, a service of the terminal is dynamically scheduled.

Specifically, the base station will dynamically configure at least one resource block, uploading service data, for the terminal, and the terminal sends the service data in the terminal to the base station using the at least one resource block configured by the base station.

The scheduling method of the embodiment can improve the stability after the uplink SPS service is activated, thereby avoiding waste of uplink scheduling resources and ensuring the quality of the uplink SPS service as far as possible.

After uplink SPS is de-activated, that is, uplink SPS configurations fail, when the UE sends empty data packets at N successive uplink SPS period points, the UE will release SPS configurations of the UE, that is, there are no fixed time-frequency resources for data uploading. In this case, when uplink SPS is de-activated or the UE satisfies other de-activation conditions, the UE will release the uplink SPS configurations, that is, the UE performs de-activation. If the base station still saves an SR response refusal status, data services will not be normally transmitted. In view of this, the method of the embodiment may further include the steps as follows.
Step 201: After uplink SPS is de-activated, response to the uplink SR initiated by the terminal is restored, and a resource is configured for the terminal.
   After uplink SPS is de-activated, the base station starts to respond to the SR initiated by the terminal, and configures the resource for the terminal, such that the terminal can send the BSR to the base station.
Step 202: The BSR sent by the terminal by means of the resource is acquired.
Step 203: According to the BSR sent by the terminal by means of the resource, the service of the terminal is dynamically scheduled.

A specific implementation process of the method of the embodiment in each scenario is introduced below.
Scenario 1: As shown in Fig. 3, preparation conditions are as follows. In Frequency Division Duplex (FDD), a Radio Resource Control (RRC) layer of a base station configures SPS parameters of a Quality Competiveness Index (QCI1), an uplink SPS period is 20ms, and the number of times of successive packet emptying is 3. A Media Access Control (MAC) layer of the base station sends DCI0 for activating uplink SPS to a UE on a sub-frame 0 of a radio frame 0, the UE successfully activates uplink SPS on this sub-frame, and then the UE transmits uplink data at an SPS period point using a fixed frequency domain resource at an interval of 20ms on a sub-frame 4 of the radio frame 0. An SR period is configured as 10ms, and an offset is 6. A first packet of SPS data of the UE does not contain effective BSR information. In the scenario, a sub-frame 4 of a radio frame 2 is a next SPS period point, so the UE can send a BSR, carried by a second packet of SPS data, to the base station at the next SPS period point, and after receiving the BSR, the base station performs dynamic adjustment. A working process of the MAC layer of the base station after uplink SPS is activated includes the steps as follows.
   Step 1: The MAC layer of the base station receives an SR initiated by the UE on a sub-frame 6 of a radio frame 0.
   Step 2: The MAC layer of the base station does not add the SR of the UE into an SR response queue on the sub-frame 6 of the radio frame 0, and the base station does not perform dynamic scheduling between the sub-frame 6 of the radio frame 0 and a sub-frame 4 of a radio frame 2.
   Step 3: The MAC layer of the base station receives the SR initiated by the UE on a sub-frame 6 of a radio frame 1.
   Step 4: The MAC layer of the base station does not add the SR of the UE into the SR response queue on the sub-frame 6 of the radio frame 1, and the base station does not perform dynamic scheduling between the sub-frame 6 of the radio frame 1 and the sub-frame 4 of the radio frame 2.

In the scenario, the MAC layer of the base station acquires a service data packet sent by the UE on the sub-frame 4 of the radio frame 2, the data packet including and carrying the BSR; and then, a service of a terminal is dynamically scheduled according to the BSR.
Scenario 2: Preparation conditions are as follows. In FDD, an RRC layer of a base station configures SPS parameters of a QCI1, an uplink SPS period is 20ms, and the number of times of successive packet emptying is 3. An MAC layer of the base station sends DCI0 for activating uplink SPS to a UE on a sub-frame 0 of a radio frame 0, the UE successfully activates uplink SPS on this sub-frame, and then the UE transmits uplink data at an SPS period point using a fixed frequency domain resource at an interval of 20ms on a sub-frame 4 of the radio frame 0. An SR period is configured as 20ms, and an offset is 6. A first packet of SPS data of the UE does not contain effective BSR information. In the scenario, a sub-frame 4 of a radio frame 2 is a next SPS period point, so the UE can send a BSR, carried by a second packet of SPS data, to the base station at the next SPS period point, and after receiving the BSR, the base station performs dynamic adjustment. With reference to Fig. 3, a process after the MAC layer of the base station activates the uplink SPS may include the steps as follows.
   Step 1: The MAC layer of the base station receives an SR initiated by the UE on a sub-frame 6 of a radio frame 0.
   Step 2: The MAC layer of the base station does not add the SR of the UE into an SR response queue on the sub-frame 6 of the radio frame 0, and the base station does not perform dynamic scheduling between the sub-frame 6 of the radio frame 0 and a sub-frame 4 of a radio frame 2.

   Similarly, in the scenario, the base station can acquire a BSR reported by the UE on the sub-frame 4 of the radio frame 2, and then dynamically schedules the terminal according to the BSR.
Scenario 3: Preparation conditions are as follows. In FDD, an RRC layer of a base station configures SPS parameters of a QCI1, an uplink SPS period is 20ms, and the number of times of successive packet emptying is 3. An MAC layer of the base station sends DCI0 for activating uplink SPS to an UE on a sub-frame 0 of a radio frame 0, the UE successfully activates uplink SPS on this sub-frame, and then the UE transmits uplink data at an SPS period point using a fixed frequency domain resource at an interval of 20ms on a sub-frame 4 of the radio frame 0. An SR period is configured as 5ms, and an offset is 1. A first packet of SPS data of the UE does not contain effective BSR information. In the scenario, a sub-frame 4 of a radio frame 2 is a next SPS period point, so the UE can send a BSR, carried by a second packet of SPS data, to the base station at the next SPS period point, and after receiving the BSR, the base station performs dynamic adjustment.
   Step 1: The MAC layer of the base station receives an SR initiated by the UE on a sub-frame 1 of a radio frame 0.
   Step 2: The MAC layer of the base station does not add the SR of the UE into an SR response queue on the sub-frame 1 of the radio frame 0, and the base station does not perform dynamic scheduling between the sub-frame 1 of the radio frame 0 and a sub-frame 4 of a radio frame 2.
   Step 3: The MAC layer of the base station receives the SR initiated by the UE on a sub-frame 6 of the radio frame 0.
   Step 4: The MAC layer of the base station does not add the SR of the UE into the SR response queue on the sub-frame 6 of the radio frame 0, and the base station does not perform dynamic scheduling between the sub-frame 6 of the radio frame 0 and the sub-frame 4 of the radio frame 2.
   Step 5: The MAC layer of the base station receives the SR initiated by the UE on a sub-frame 1 of a radio frame 1.
   Step 6: The MAC layer of the base station does not add the SR of the UE into the SR response queue on the sub-frame 1 of the radio frame 1, and the base station does not perform dynamic scheduling between the sub-frame 1 of the radio frame 1 and the sub-frame 4 of the radio frame 2.
   Step 7: The MAC layer of the base station receives the SR initiated by the UE on a sub-frame 6 of the radio frame 1.
   Step 8: The MAC layer of the base station does not add the SR of the UE into the SR response queue on the sub-frame 6 of the radio frame 1, and the base station does not perform dynamic scheduling between the sub-frame 6 of the radio frame 1 and the sub-frame 4 of the radio frame 2.
   Step 9: The MAC layer of the base station receives the SR initiated by the UE on a sub-frame 1 of the radio frame 2.
   Step 10: The MAC layer of the base station does not add the SR of the UE into the SR response queue on the sub-frame 1 of the radio frame 2, and the base station does not perform dynamic scheduling between the sub-frame 1 of the radio frame 2 and the sub-frame 4 of the radio frame 2.

In the scenario, the MAC layer of the base station can acquire a BSR reported by the UE on the sub-frame 4 of the radio frame 2, and then dynamically schedules a terminal according to the BSR.

### Embodiment 2:

The embodiment will introduce application of the method of the disclosure in specific scenarios in detail. In the embodiment, after uplink SPS is activated, an UE will initiate an SR, but a base station will not respond to the SR.

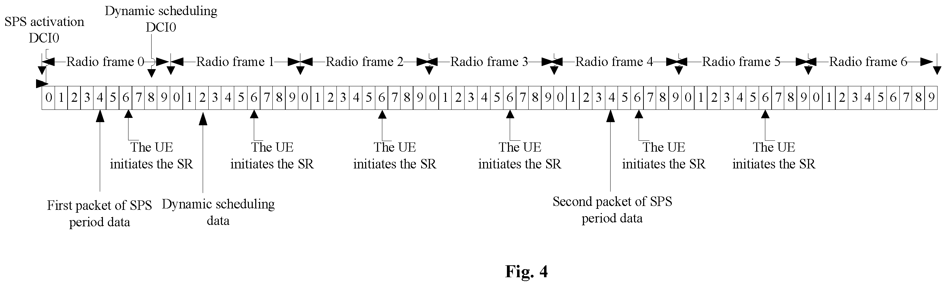

Preparation conditions are as follows. In FDD, an RRC layer of a base station configures SPS parameters of a QCI1, an uplink SPS period is 40ms, and the number of times of successive packet emptying is 3. An MAC layer of the base station sends DCI0 for activating uplink SPS to the UE on a sub-frame 0 of a radio frame 0, the UE successfully activates the uplink SPS on this sub-frame, and then the UE transmits uplink data at an SPS period point using a fixed frequency domain resource at an interval of 40ms on a sub-frame 4 of the radio frame 0. An SR period is configured as 5ms, and an offset is 1. A first packet of SPS data of the UE contains effective BSR information. With reference to Fig. 4, a working process of the base station in the scenario using the scheduling method of the embodiment includes the steps as follows.
Step 1: The MAC layer of the base station receives an SR initiated by the UE on a sub-frame 6 of a radio frame 0.
Step 2: The MAC layer of the base station does not add the SR of the UE into an SR response queue on the sub-frame 6 of the radio frame 0, and the base station does not perform dynamic scheduling between the sub-frame 6 of the radio frame 0 and a sub-frame 4 of the radio frame 0.
Step 3: The MAC layer of the base station issues DCI0 on a sub-frame 8 of the radio frame 0 for dynamic scheduling, a target value for scheduling being the size of the BSR acquired in Step 2. Suppose BSR scheduling is completed on the current sub-frame.
Step 4: The MAC layer of the base station receives the SR initiated by the UE on a sub-frame 1 of a radio frame 1.
Step 5: The MAC layer of the base station does not add the SR of the UE into the SR response queue on the sub-frame 1 of the radio frame 1, and the base station does not perform dynamic scheduling between the sub-frame 1 of the radio frame 1 and a sub-frame 4 of a radio frame 4.
Step 6: The MAC layer of the base station receives the SR initiated by the UE on a sub-frame 6 of the radio frame 1.
Step 7: The MAC layer of the base station does not add the SR of the UE into the SR response queue on the sub-frame 6 of the radio frame 1, and the base station does not perform dynamic scheduling between the sub-frame 6 of the radio frame 1 and the sub-frame 4 of the radio frame 4.
Step 8: The MAC layer of the base station receives the SR initiated by the UE on a sub-frame 1 of a radio frame 2.
Step 9: The MAC layer of the base station does not add the SR of the UE into the SR response queue on the sub-frame 1 of the radio frame 2, and the base station does not perform dynamic scheduling between the sub-frame 1 of the radio frame 2 and the sub-frame 4 of the radio frame 4.
Step 10: The MAC layer of the base station receives the SR initiated by the UE on a sub-frame 6 of the radio frame 2.
Step 11: The MAC layer of the base station does not add the SR of the UE into the SR response queue on the sub-frame 6 of the radio frame 2, and the base station does not perform dynamic scheduling between the sub-frame 6 of the radio frame 2 and the sub-frame 4 of the radio frame 4.
Step 12: The MAC layer of the base station receives the SR initiated by the UE on a sub-frame 1 of a radio frame 3.
Step 13: The MAC layer of the base station does not add the SR of the UE into the SR response queue on the sub-frame 1 of the radio frame 3, and the base station does not perform dynamic scheduling between the sub-frame 1 of the radio frame 3 and the sub-frame 4 of the radio frame 4.

Optionally, Step 12: The MAC layer of the base station receives the SR initiated by the UE on a sub-frame 6 of the radio frame 3. Step 13: The MAC layer of the base station does not add the SR of the UE into the SR response queue on the sub-frame 6 of the radio frame 3, and the base station does not perform dynamic scheduling between the sub-frame 6 of the radio frame 3 and the sub-frame 4 of the radio frame 4.

Optionally, Step 12: The MAC layer of the base station receives the SR initiated by the UE on a sub-frame 1 of the radio frame 4. Step 13: The MAC layer of the base station does not add the SR of the UE into the SR response queue on the sub-frame 1 of the radio frame 4, and the base station does not perform dynamic scheduling between the sub-frame 1 of the radio frame 4 and the sub-frame 4 of the radio frame 4.

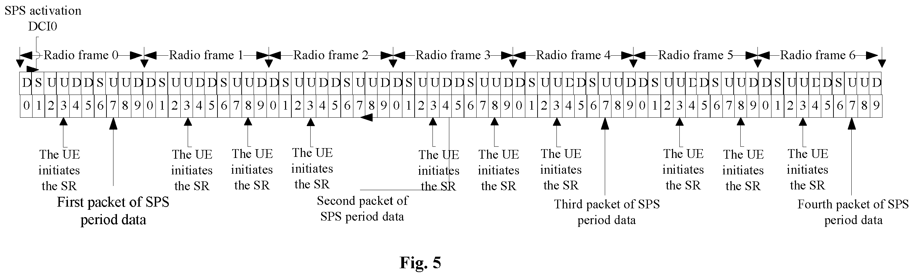

As shown in Fig. 5, another application scenario in the embodiment refers to: In Time Division Duplex (TDD), a ratio of uplink sub-frames to downlink sub-frames being 1, and DSUUDDSUUD. An RRC layer of a base station configures SPS parameters of a QCI1, an uplink SPS period is 20ms, double periods are closed, and the number of times of successive packet emptying is 3. An MAC layer of the base station sends DCI0 for activating uplink SPS to an UE on a radio frame 0 1S, the UE successfully activates uplink SPS on this sub-frame, and then the UE transmits uplink data at an SPS period point using a fixed frequency domain resource at an interval of 20ms on a radio frame 0 7U. An SR period is configured as 5ms, and an offset is 3. A first packet of SPS data of the UE does not contain effective BSR information. The step of uplink SPS in this scenario refers to Fig. 5. Before a radio frame 2 7U, the base station will not respond to an SR and will not perform dynamic adjustment because a BSR is sent to the base station only at an SPS period point using the method of the disclosure.

In addition, although only a DCI0 format is described above, DCI formats for dynamic scheduling in the embodiment further include, but not limited to the DCI0 format, for example, DCI4.

### Embodiment 3:

The embodiment will introduce a specific process of the scheduling method of the disclosure after uplink SPS is de-activated.

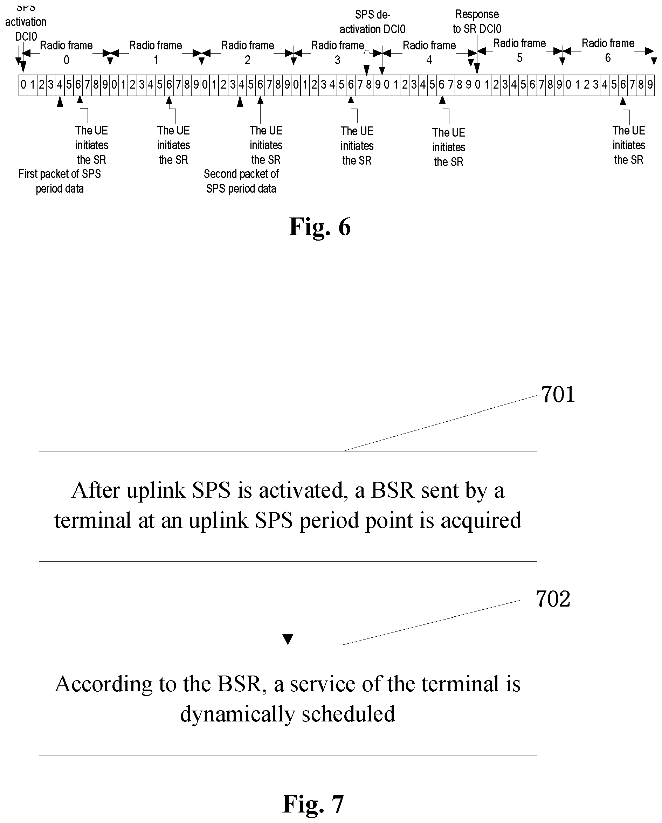

Preparation conditions of a scenario are as follows. In FDD, an RRC layer of a base station configures SPS parameters of a QCI1, an uplink SPS period is 20ms, and the number of times of successive packet emptying is 3. An MAC layer of the base station sends DCI0 for activating uplink SPS to a UE on a sub-frame 0 of a radio frame 0, the UE successfully activates uplink SPS on this sub-frame, and then the UE transmits uplink data at an SPS period point using a fixed frequency domain resource at an interval of 20ms on a sub-frame 4 of the radio frame 0. An SR period is configured as 10ms, and an offset is 1. A first packet of SPS data of the UE does not contain effective BSR information. As shown in Fig. 6, a process of scheduling in the scenario using the uplink SPS method of the embodiment includes the steps as follows.
Step 1: The MAC layer of the base station receives an SR initiated by the UE on a sub-frame 6 of a radio frame 0.
Step 2: The MAC layer of the base station does not add the SR of the UE into an SR response queue on the sub-frame 6 of the radio frame 0, and the base station does not perform dynamic scheduling between the sub-frame 6 of the radio frame 0 and a sub-frame 4 of a radio frame 2.
Step 3: The MAC layer of the base station receives the SR initiated by the UE on a sub-frame 6 of a radio frame 1.
Step 4: The MAC layer of the base station does not add the SR of the UE into the SR response queue on the sub-frame 6 of the radio frame 1, and the base station does not perform dynamic scheduling between the sub-frame 6 of the radio frame 1 and the sub-frame 4 of the radio frame 2.
Step 5: The MAC layer of the base station issues uplink de-activation SPS DCI0 on a sub-frame 8 of a radio frame 3, and the UE releases uplink SPS configurations within a current Transmission Time Interval (TTI).
Step 6: The MAC layer of the base station receives the SR initiated by the UE on a sub-frame 6 of a radio frame 4.
Step 7: The MAC layer of the base station adds the SR into an SR response scheduling queue on the sub-frame 6 of the radio frame 4, and issues dynamic scheduling on a sub-frame 0 of a radio frame 5, so as to respond to the DCI0 of the SR, as shown in Fig. 4.

Note: various period offset combinations of other SPS and SRs under the FDD conform to rules under the FDD. Other TDD ratios and various SPS and SR period offset combinations meet rules under TDD. Under the TDD, double periods are enabled in accordance with rules under the TDD probably.

In addition, although only a DCI0 format is described above, DCI formats for dynamic scheduling in the embodiment further include, but not limited to the DCI0 format, for example, DCI4.

### Embodiment 4:

As shown in Fig. 7, the embodiment provides a scheduling method for a base station, which includes the steps as follows.
Step 701: After uplink SPS is activated, a BSR sent by a terminal at an uplink SPS period point is acquired.
   In the embodiment, the base station activates uplink SPS by sending DCI0 to an UE; and after uplink SPS is activated, the terminal will no longer initiate an SR to the base station, so the base station in the embodiment cannot receive the SR and cannot respond to the SR.
   After uplink SPS is activated, if other data services appear, the SR is initiated to the base station so as to request for a resource generally in the related art. Specifically, the base station responds to the SR, configures a resource, uploading a BSR, for the terminal, and then schedules these data services according to the BSR. However, the terminal no longer initiates the SR in the embodiment, so as to ensure normal sending of service data, the base station in the embodiment can acquire the BSR sent by the terminal at the uplink SPS period point, and then performs dynamic scheduling according to the BSR. In such a way, the problems of service instability and resource waste caused by transmission of other data services after uplink SPS is activated are avoided. The uplink SPS period point of the embodiment is determined by pre-set configuration information about uplink SPS. The pre-set configuration information includes an interval-fixed period and a pre-set time-frequency resource, and after uplink SPS is activated, the terminal sends service data at the interval-fixed period using the pre-set time-frequency resource.
   In an example embodiment, in the scheduling method of the embodiment, the BSR can be carried by a service data packet uploaded at the uplink SPS period point and is sent to the base station. So, the scheduling method for the base station of the embodiment can acquire the BSR by means of the service data packet uploaded by the terminal at the uplink SPS period point.
Step 702: According to the BSR, a service of the terminal is dynamically scheduled.

The scheduling method of the embodiment can improve the stability after an uplink SPS service is activated, thereby avoiding waste of uplink scheduling resources and ensuring the quality of the uplink SPS service as far as possible.

After uplink SPS configurations fail, that is, after SPS is de-activated, if the base station is always unable to receive the SR, data services will not be normally transmitted. In view of this, the method of the embodiment may further include the steps as follows.

After uplink SPS is de-activated, response to an uplink SR initiated by the terminal is made, and a resource is configured for the terminal.

The BSR sent by the terminal by means of the resource is acquired.

According to the BSR sent by the terminal by means of the resource, the service of the terminal is dynamically scheduled.

Specific application of the scheduling method for a base station of the embodiment in an actual communication scenario is introduced below.

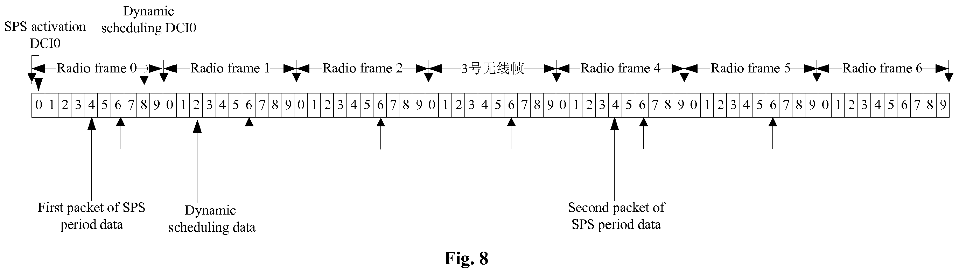

Preparation conditions of the scenario are as follows. In FDD, an RRC layer of a base station configures SPS parameters of a QCI1, an uplink SPS period is 40ms, and the number of times of successive packet emptying is 3. An MAC layer of the base station sends DCI0 for activating uplink SPS to an UE on a sub-frame 0 of a radio frame 0, the UE successfully activates uplink SPS on this sub-frame, and then the UE transmits uplink data at an SPS period point using a fixed frequency domain resource at an interval of 40ms on a sub-frame 4 of the radio frame 0. An SR period is configured as 5ms, and an offset is 1. A first packet of SPS data of the UE contains effective BSR information. With reference to Fig. 8, a working process of the base station in the scenario using the scheduling method of the embodiment includes the steps as follows.
Step 1: When an SR period is reached, due to the fact that the UE no longer initiates an SR after activation, the MAC layer of the base station cannot receive the SR on a sub-frame 6 of a radio frame 0, and will not respond to the SR.
Step 2: The MAC layer of the base station acquires BSR information reported by the UE in a sub-frame 4 of the radio frame 0.
Step 3: The MAC layer of the base station issues DCI0 on a sub-frame 8 of the radio frame 0 for dynamic scheduling, a target value for scheduling being the size of the BSR acquired in Step 2. Suppose BSR scheduling is completed on the current sub-frame.
Step 4: After scheduling is completed, the MAC layer of the base station will receive the SR. That is, the MAC layer of the base station will not receive the SR on a sub-frame 1 of a radio frame 1, a sub-frame 6 of the radio frame 1, a sub-frame 1 of a radio frame 2, a sub-frame 6 of the radio frame 2, a sub-frame 1 of a radio frame 3, a sub-frame 6 of the radio frame 3 and a sub-frame 1 of a radio frame 4.

In the scenario of the embodiment, only after uplink SPS is de-activated in a subsequent process, the MAC layer of the base station receives the SR, responds to the SR so as to acquire the BSR, and then performs dynamic scheduling.

### Embodiment 5:

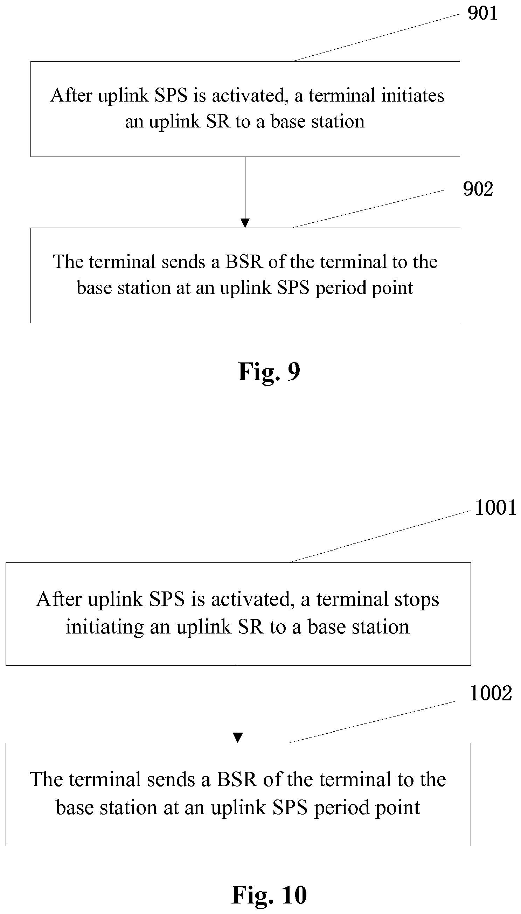

In correspondence to the scheduling method for a base station in the embodiment 1, as shown in Fig. 9, the embodiment provides a sending method, which includes the steps as follows.
Step 901: After uplink SPS is activated, a terminal initiates an uplink SR to a base station.
   In the embodiment, after the terminal detects that uplink SPS is activated, a service data packet will be uploaded to the base station using pre-configured video resources. When a new service or an SR period is reached, the terminal will initiate the uplink SR to the base station to request a resource to upload a BSR. However, because the disclosure needs to avoid SR response, the base station will not make response no matter how the terminal sends the SR, thereby avoiding the problem caused by SR response at a non-period point.
Step 902: The terminal sends the BSR of the terminal to the base station at an uplink SPS period point.

The terminal of the embodiment can send the BSR to the base station at a pre-configured uplink SPS period point to allow the base station to perform dynamic scheduling. In the embodiment, the BSR is sent at the uplink SPS period point because the terminal uploads a higher-priority VoIP service packet to the base station using the pre-configured video resources at a period point in uplink SPS, such that the situation of transmission of only padding at the SPS period point caused by the fact that the terminal will upload a higher-priority service packet to the base station after the base station schedules the terminal when receiving the BSR is avoided, thereby improving the stability of an uplink SPS service.

Because the terminal needs to upload a service data packet at the uplink SPS period point, the BSR can be carried in the service data packet, that is, the BSR is sent to the base station at the uplink SPS period point by means of the uploaded service data packet.

After uplink SPS is de-activated, that is, after uplink SPS configurations fail, data services can be normally transmitted. In view of this, the method of the embodiment may further include the steps as follows.

After uplink SPS is de-activated, the BSR of the terminal is sent to the base station by means of a resource configured for the terminal by the base station in response to the uplink SR.

In the embodiment, after uplink SPS is de-activated, the terminal can upload the BSR to the base station in response to the SR of the terminal, thereby ensuring that data can be normally transmitted after uplink SPS is de-activated.

Specific descriptions of the sending method of the embodiment can refer to sending contents of SRs and period data packets in Fig. 3, Fig. 4 and Fig. 6.

### Embodiment 6:

In correspondence to the scheduling method for a base station in the embodiment 4, as shown in Fig. 10, the embodiment provides a sending method, which includes the steps as follows.
Step 1001: After uplink SPS is activated, a terminal stops initiating an uplink SR to a base station.
   In the embodiment, after the terminal detects that the base station activates the uplink SPS, the terminal will no longer initiate an SR to the base station, so the base station cannot receive the SR and will not respond to the SR.
Step 1002: The terminal sends a BSR of the terminal to the base station at an uplink SPS period point.

After uplink SPS is activated, if other data services appear, the SR is initiated to the base station so as to request for a resource, sending the BSR, generally in the related art, and these data services are scheduled according to the BSR. However, the terminal no longer initiates the SR in the embodiment, so in order to ensure normal sending of service data, in the embodiment, the BSR can be sent to the base station at the SPS period point to allow the base station to perform dynamic scheduling.

By applying the sending method of the embodiment to the uplink SPS, the problems of poor service stability and resource waste after uplink SPS is activated can be solved.

Because the terminal needs to upload a service data packet at the uplink SPS period point, the BSR can be carried in the service data packet, that is, the BSR is sent to the base station at the uplink SPS period point by means of the uploaded service data packet.

After the uplink SPS is de-activated, that is, after uplink SPS configurations fail, if the base station is always unable to receive the SR, data services will not be normally transmitted. In view of this, the method of the embodiment may further include the steps as follows.

After uplink SPS is de-activated, the terminal restores to initiate the uplink SR to the base station.

The terminal sends the BSR of the terminal to the base station by means of a resource configured for the terminal by the base station in response to the uplink SR.

Behaviours at a terminal side of the embodiment are received below by means of application of the method of the embodiment in a specific scenario.

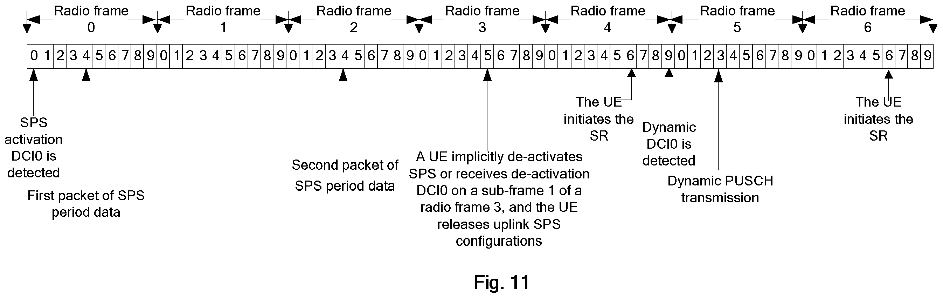

Preparation conditions of the scenario are as follows. An UE supporting an SPS function establishes a QCI1 service, namely a VoIP. After the UE receives a reconfiguration signalling sent by the base station side, an SPS period is 20ms, an SR period is 5ms, and an SR offset is 6. With reference to Fig. 11, a scheduling process in the scenario includes the steps as follows.
Step 1: The UE detects DCI0 for SPS activation on a sub-frame 0 of a radio frame 0, and the UE activates SPS configurations on this sub-frame.
Step 2: The UE newly transmits a first packet of SPS period on a sub-frame 4 of the radio frame 0.
Step 3: An SR period of the UE is reached, but the UE does not send an SR.
Step 4: The UE newly transmits a second packet of SPS period on a sub-frame 4 of a radio frame 2.
Step 5: If the UE satisfies SPS implicit de-activation conditions on a sub-frame 5 of a radio frame 3, or the UE detects SPS de-activation DCI0 sent by the base station on the current sub-frame, the UE releases SPS configurations.
Step 6: The UE sends the SR on a sub-frame 6 of a radio frame 4.
Step 7: The UE detects dynamic scheduling DCI0 issued by the base station on a sub-frame 9 of the radio frame 4.

It will be appreciated that although the disclosure only introduces a UE-side scenario embodiment, the disclosure may further include, besides this embodiment, other scenario embodiments.

In addition, although only a DCI0 format is described above, DCI formats for dynamic scheduling in the embodiment further include, but not limited to the DCI0 format, for example, DCI4, and SPS de-activation DCI formats are limited to DCI0 generally.

### Embodiment 7:

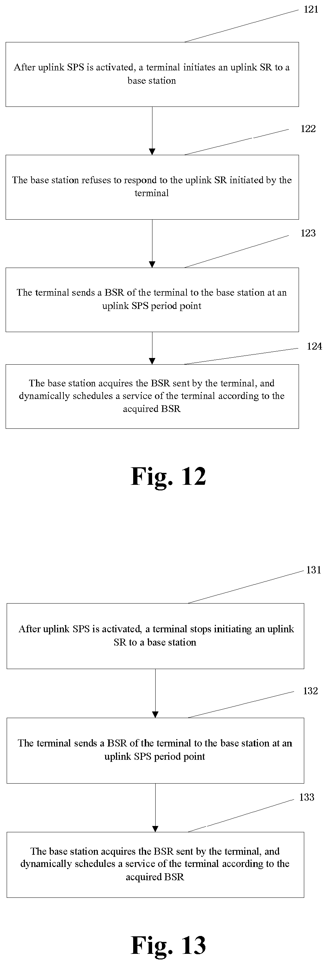

As shown in Fig. 12, the embodiment provides a scheduling method, which is applied to uplink SPS and includes the steps as follows.
Step 121: After uplink SPS is activated, a terminal initiates an uplink SR to a base station.
   The base station of the embodiment can activate uplink SPS by sending DCI0 to an UE.
Step 122: The base station refuses to respond to the uplink SR initiated by the terminal.
   The base station of the embodiment no longer initiates an SR after uplink SPS is activated.
Step 123: The terminal sends a BSR of the terminal to the base station at an uplink SPS period point.
   In an example embodiment, in the scheduling method of the embodiment, the terminal sends the BSR of the terminal to the base station at the uplink SPS period point by means of a service data packet uploaded at the period point. That is, the BSR is carried in the service data packet uploaded at the uplink SPS period point.
Step 124: The base station acquires the BSR sent by the terminal, and dynamically schedules a service of the terminal according to the acquired BSR.

In the scheduling method of the embodiment, after uplink SPS is activated, SR response is no longer made, and the BSR is sent at the uplink SPS period point. The problem that the UE sends an empty data packet due to SR response at a non-uplink SPS period point is avoided, and the stability of an uplink SPS service is improved. Resources of a system can be saved due to no SR response after uplink SPS is activated. Compared with a conventional method, the method of the disclosure improves the quality of an uplink SPS service.

After uplink SPS is de-activated, that is, after uplink SPS configurations fail, if the base station also saves an SR response refusal status, data services will not be normally transmitted. In view of this, the method of the embodiment may further include the steps as follows.

After uplink SPS is de-activated, the base station restores to respond to the uplink SR initiated by the terminal, and configures a resource for the terminal.

The terminal sends the BSR of the terminal to the base station by means of the resource.

The base station dynamically schedules the service of the terminal according to the BSR sent by the terminal by means of the resource.

The method of the embodiment can restore SR response after the uplink SPS is de-activated, thereby ensuring normal transmission of uplink data.

Detail introductions for all steps of the method of the embodiment can refer to receiving of behaviours of the base station and the terminal in the above embodiment, which will not be elaborated herein.

### Embodiment 8:

As shown in Fig. 13, the embodiment provides a scheduling method, which is applied to uplink SPS and includes the steps as follows.
Step 131: After uplink SPS is activated, a terminal stops initiating an uplink SR to a base station.
   The base station of the embodiment can activate uplink SPS by sending DCI0 to an UE. The terminal will no longer send an SR after activation.
Step 132: The terminal sends a BSR of the terminal to the base station at an uplink SPS period point.
   In an example embodiment, in the scheduling method of the embodiment, the terminal sends the BSR of the terminal to the base station at the uplink SPS period point by means of a service data packet uploaded at the period point. That is, the BSR is carried in the service data packet uploaded at the uplink SPS period point.
Step 133: The base station acquires the BSR sent by the terminal, and dynamically schedules a service of the terminal according to the acquired BSR.
   In the scheduling method of the embodiment, after uplink SPS is activated, the uplink SR is no longer initiated, the base station will no longer make SR response, and the BSR is sent by the terminal at the uplink SPS period point. The problem that the UE sends an empty data packet due to the SR response at a non-uplink SPS period point is avoided, and the stability of an uplink SPS service is improved. Resources of a system can be saved due to no SR response after uplink SPS is activated. Compared with a conventional method, the method of the disclosure improves the quality of an uplink SPS service.

After uplink SPS is de-activated, if the base station also saves an SR response refusal status, data services will not be normally transmitted. In view of this, the method of the embodiment may further include the steps as follows.

After uplink SPS is de-activated, the terminal restores to initiate the uplink SR to the base station.

The base station responds to the uplink SR, and configures a resource for the terminal.

The terminal sends the BSR of the terminal to the base station by means of the resource.

The base station dynamically schedules the service of the terminal according to the BSR sent by the terminal by means of the resource.

The method of the embodiment can restore the SR response after uplink SPS is de-activated, thereby ensuring normal transmission of uplink data.

Detail introductions for all steps of the method of the embodiment can refer to receiving of behaviours of the base station and the terminal in the above embodiment, which will not be elaborated herein.

### Embodiment 9:

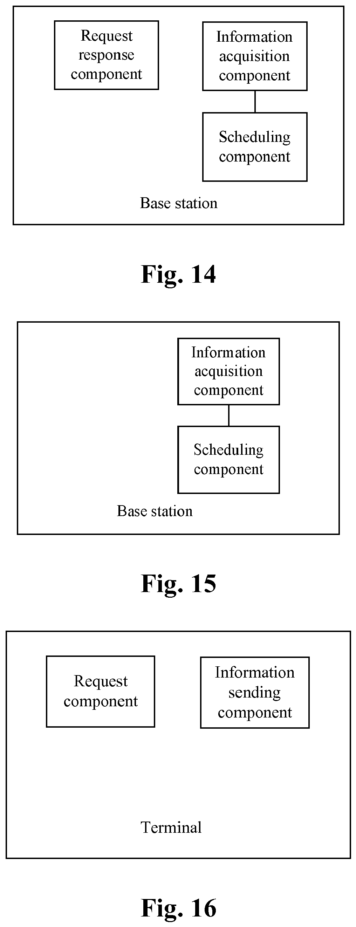

As shown in Fig. 14, the embodiment provides a base station, which includes: a request response component, an information acquisition component and a scheduling component, wherein
the request response component is configured to refuse, after uplink SPS is activated, to respond to an uplink SR initiated by a terminal;
the information acquisition component is configured to acquire a BSR sent by the terminal at an uplink SPS period point; and
the scheduling component is configured to dynamically schedule, according to the BSR, a service of the terminal.

The base station of the embodiment will no longer respond to the uplink SR initiated by the terminal after SPS is activated, and acquires the BSR sent by the terminal at the SPS period point for dynamic scheduling, thereby avoiding the problem of service stability caused by SR response at a non-SPS period point, and improving the quality of service.

In an example embodiment, the request response component is further configured to restore, after uplink SPS is de-activated, to respond to the uplink SR initiated by the terminal, and configure a resource for the terminal;
the information acquisition component is further configured to acquire the BSR sent by the terminal by means of the resource; and
the scheduling component is further configured to dynamically schedule, according to the BSR sent by the terminal by means of the resource, the service of the terminal.

In an example embodiment, the information acquisition component is configured to acquire the BSR by means of a service data packet uploaded by the terminal at the uplink SPS period point.

In the embodiment, functions of the above components are implemented. For example, the functions of the request response component, the information acquisition component and the scheduling component can be completed by means of hardware relevant to a function program instruction. A program can be stored in a readable storage medium of the base station, and a processor calls a program instruction in the storage medium to implement the functions of the above components. For example, the processor calls the program in a memory to execute a function of refusing to respond to an uplink SR initiated by a terminal after uplink SPS is activated (implementation of other component functions, similar to same, will not be elaborated herein). The storage medium in the embodiment includes: various media capable of storing program codes such as a Read-Only Memory (ROM), a Random Access Memory (RAM), a magnetic disk or an optical disk.

As shown in Fig. 15, the embodiment also provides another base station, which includes: an information acquisition component and a scheduling component, wherein
the information acquisition component is configured to acquire, after uplink SPS is activated, a BSR sent by a terminal at an uplink SPS period point; and
the scheduling component is configured to dynamically schedule, according to the BSR, a service of the terminal.

In Fig. 15, the base station cannot receive the SR after uplink SPS is activated, does not respond to the SR, and acquires the BSR sent by a terminal at the SPS period point for dynamic scheduling, thereby avoiding the problem of service stability caused by SR response at a non-SPS period point, and improving the quality of service.

In an example embodiment, with reference to Fig. 14, on the basis of Fig. 15, the base station of the embodiment may further include: a request response component, wherein
the request response component is configured to respond, after uplink SPS is de-activated, to the uplink SR initiated by the terminal, and configure a resource for the terminal;
the information acquisition component is further configured to acquire the BSR sent by the terminal by means of the resource; and
the scheduling component is further configured to dynamically schedule, according to the BSR sent by the terminal by means of the resource, the service of the terminal.

The base station of the embodiment can protect normal transmission of service data after de-activation.

In an example embodiment, the information acquisition component of the embodiment is configured to acquire the BSR by means of a service data packet uploaded by the terminal at the uplink SPS period point.

In the embodiment, functions of the above components are implemented. For example, the functions of the request response component, the information acquisition component and the scheduling component can be completed by means of hardware relevant to a function program instruction. A program can be stored in a readable storage medium of the base station, and a processor calls a program instruction in the storage medium to implement the functions of the above components. For example, the processor calls the program in a memory to execute a function of refusing to respond to the uplink SR initiated by the terminal after the uplink SPS is activated (implementation of other component functions, similar to same, will not be elaborated herein). The storage medium in the embodiment includes: various media capable of storing program codes such as an ROM, an RAM, a magnetic disk or an optical disk.

Specific introductions for functions of all components of the base station in the embodiment can refer to behaviours of a base station side introduced in the above embodiment.

### Embodiment 10:

As shown in Fig. 16, the embodiment provides a terminal, which includes: a request component and an information sending component, wherein
the request component is configured to stop, after uplink SPS is activated, initiating an uplink SR to a base station; and
the information sending component is configured to send a BSR of the terminal to the base station at an uplink SPS period point.

The terminal of the embodiment can cooperate with a base station to acquire a BSR without SR response after the uplink SPS is activated, thereby avoiding the problem of service stability caused by SR response at a non-SPS period point, and improving the quality of service.

In an example embodiment, the request component in the embodiment is further configured to restore, after uplink SPS is de-activated, to initiate the uplink SR to the base station; and the information sending component is further configured to send the BSR of the terminal to the base station by means of a resource configured for the terminal by the base station in response to the uplink SR.

In an example embodiment, the information sending component is configured to send the BSR to the base station at the uplink SPS period point by means of an uploaded service data packet.

With reference to Fig. 16, the embodiment also provides another terminal, which includes: a request component and an information sending component, wherein
the request component is configured to initiate, after uplink SPS is activated, the uplink SR to the base station; and
the information sending component is configured to send the BSR of the terminal to the base station at the uplink SPS period point.

The terminal of the embodiment can cooperate with the base station which does not respond to the SR after activation, thereby avoiding the problems of instability of an uplink SPS service and resource waste.

In an example embodiment, the information sending component is further configured to send, after uplink SPS is de-activated, the BSR of the terminal to the base station by means of a resource configured for the terminal by the base station in response to the uplink SR.

In an example embodiment, the information sending component is configured to send the BSR to the base station at the uplink SPS period point by means of an uploaded service data packet.

In the terminal of the embodiment, functions of the above components are implemented. For example, the functions of the request component and the information sending component can be completed by means of hardware relevant to a function program instruction. A function program can be stored in a readable storage medium of the terminal, and a processor in the terminal calls a program instruction in the storage medium to implement the functions of the above components. For example, the processor calls the program in a memory to execute a function of stopping initiating the uplink SR to the base station after the uplink SPS is activated (implementation of other component functions, similar to same, will not be elaborated herein). The storage medium in the embodiment includes: various media capable of storing program codes such as an ROM, an RAM, a magnetic disk or an optical disk.

### Embodiment 11:

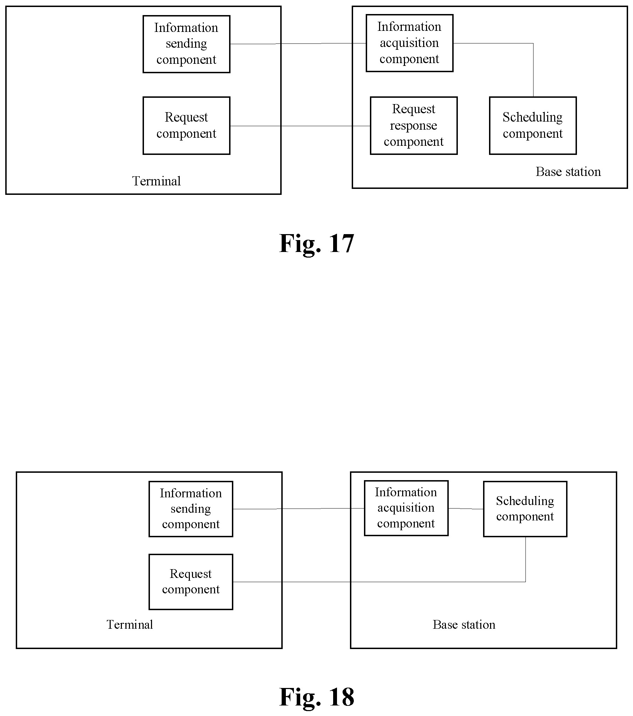

As shown in Fig. 17, the embodiment provides a scheduling system, which is applied to uplink SPS and includes a terminal and a base station, wherein
the terminal includes: a request component and an information sending component;
the base station includes: a request response component, an information acquisition component and a scheduling component;
the request component is configured to initiate, after uplink SPS is activated, an uplink SR to the base station;
the request response component is configured to refuse to respond to the uplink SR initiated by the terminal;
the information sending component is configured to send a BSR of the terminal to the base station at an uplink SPS period point;
the information acquisition component is configured to acquire the BSR sent by the terminal; and
the scheduling component is configured to dynamically schedule, according to the acquired BSR, a service of the terminal.

The scheduling system of the embodiment may acquire the BSR without SR response after uplink SPS is activated. The problem that a UE sends an empty data packet due to SR response at a non-uplink SPS period point is avoided, and the stability of an uplink SPS service is improved. Resources of the system can be saved due to no SR response after uplink SPS is activated. Compared with a conventional system, the system of the disclosure improves the quality of an uplink SPS service.

In an example embodiment, the request response component is further configured to restore, by the base station, to respond to the uplink SR initiated by the terminal after uplink SPS is de-activated, and configure a resource for the terminal; and the information sending component is further configured to send the BSR of the terminal to the base station by means of the resource.

In an example embodiment, the information sending component is configured to send the BSR of the terminal to the base station at the uplink SPS period point by means of a service data packet uploaded at the period point.

As shown in Fig. 18, the embodiment also provides another scheduling system, which includes a terminal and a base station, wherein
the terminal includes: a request component and an information sending component;
the base station includes: an information acquisition component and a scheduling component;
the request component is configured to stop, after uplink SPS is activated, initiating an uplink SR to a base station;
the information sending component is configured to send a BSR of the terminal to the base station at an uplink SPS period point;
the information acquisition component is configured to acquire the BSR sent by the terminal; and
the scheduling component is configured to dynamically schedule, according to the acquired BSR, a service of the terminal.

Furthermore, on a basis of the system shown in Fig. 18, with reference to Fig. 17, the base station may further include: a request response component, wherein
the request component is further configured to restore, after uplink SPS is de-activated, to initiate the uplink SR to the base station;
the request response component is configured to respond to the uplink SR, and configure a resource for the terminal; and
the information sending component is further configured to send the BSR of the terminal to the base station by means of the resource.

In an example embodiment, the information sending component is configured to send the BSR of the terminal to the base station at the uplink SPS period point by means of a service data packet uploaded at the period point.

In the terminal of the system of the embodiment, functions of the above components are implemented. For example, the functions of the request component and the information sending component can be completed by means of hardware relevant to a function program instruction. A function program can be stored in a readable storage medium of the terminal, and a processor in the terminal calls a program instruction in the storage medium to implement the functions of the above components. For example, the processor calls the program in a memory to execute a function of stopping initiating the uplink SR to the base station after uplink SPS is activated (implementation of other component functions, similar to same, will not be elaborated herein). The storage medium in the embodiment includes: various media capable of storing program codes such as an ROM, an RAM, a magnetic disk or an optical disk.

In the base station of the system of the embodiment, functions of the above components are implemented. For example, the functions of the request response component, the information acquisition component and the scheduling component can be completed by means of hardware relevant to a function program instruction. A program can be stored in a readable storage medium of the base station, and a processor calls a program instruction in the storage medium to implement the functions of the above components. For example, the processor calls the program in a memory to execute a function of refusing to respond to the uplink SR initiated by the terminal after the uplink SPS is activated (implementation of other component functions, similar to same, will not be elaborated herein). The storage medium in the embodiment includes: various media capable of storing program codes such as an ROM, an RAM, a magnetic disk or an optical disk.

The scheduling system of the embodiment can send the BSR to the base station at the uplink SPS period point to allow the base station to perform dynamic scheduling. The problem that the UE sends an empty data packet due to SR response at a non-uplink SPS period point is avoided, and the stability of an uplink SPS service is improved. Resources of the system can be saved due to no SR response after uplink SPS is activated. Compared with a conventional system, the system of the disclosure improves the quality of an uplink SPS service.

The above is further detailed illustrations of the disclosure in conjunction with specific implementations. It cannot be considered that the specific implementations of the disclosure are only limited to these illustrations. Several simple deductions or replacements made by those skilled in the art to which the disclosure is attached without departing from the concept of the disclosure shall be regarded as falling within the protective scope of the disclosure.

### Industrial Applicability

As above, a scheduling method and system, a terminal, a sending method, a base station and a scheduling method therefor, provided by the embodiments of the disclosure, have the beneficial effects as follows. The problem that an UE sends an empty data packet due to SR response at a non-uplink SPS period point is avoided, and the stability of an uplink SPS service is improved. Resources of a system can be saved due to no SR response after uplink SPS is activated. Compared with conventional methods, the methods of the disclosure improve the quality of an uplink SPS service.

## Claims

1. A scheduling method for a base station, comprising:
refusing, after uplink Semi-Persistence Scheduling (SPS) is activated, to respond to an uplink Scheduling Request (SR) initiated by a terminal;
acquiring a Buffer Status Reporting (BSR) sent by the terminal at an uplink SPS period point; and
dynamically scheduling, according to the BSR, a service of the terminal.

2. The method as claimed in claim 1, further comprising:
restoring, after the uplink SPS is de-activated, to respond to the uplink SR initiated by the terminal, and configuring a resource for the terminal;
acquiring a BSR sent by the terminal by means of the resource; and
dynamically scheduling, according to the BSR sent by the terminal by means of the resource, the service of the terminal.

3. The method as claimed in claim 1 or 2, wherein acquiring the BSR sent by the terminal at the uplink SPS period point comprises:
acquiring the BSR by means of a service data packet uploaded by the terminal at the uplink SPS period point.

4. A scheduling method for a base station, comprising:
acquiring, after uplink Semi-Persistence Scheduling (SPS) is activated, a Buffer Status Reporting (BSR) sent by a terminal at an uplink SPS period point; and
dynamically scheduling, according to the BSR, a service of the terminal.

5. The method as claimed in claim 4, further comprising:
responding, after the uplink SPS is de-activated, to an uplink Scheduling Request (SR) initiated by the terminal, and configuring a resource for the terminal;
acquiring the BSR sent by the terminal by means of the resource; and
dynamically scheduling, according to the BSR sent by the terminal by means of the resource, the service of the terminal.

6. The method as claimed in claim 4 or 5, wherein acquiring the BSR sent by the terminal at the uplink SPS period point comprises:
acquiring the BSR by means of a service data packet uploaded by the terminal at the uplink SPS period point.

7. A sending method, comprising:
stopping, by a terminal, initiating an uplink Scheduling Request (SR) to a base station after uplink Semi-Persistence Scheduling (SPS) is activated; and
sending, by the terminal, a Buffer Status Reporting (BSR) of the terminal to the base station at an uplink SPS period point.

8. The method as claimed in claim 7, further comprising:
restoring, by the terminal, to initiate the uplink SR to the base station after the uplink SPS is de-activated; and
sending, by the terminal, the BSR of the terminal to the base station by means of a resource configured for the terminal by the base station in response to the uplink SR.

9. The method as claimed in claim 7 or 8, wherein sending, by the terminal, the BSR of the terminal to the base station at the uplink SPS period point comprises:
sending, by the terminal, the BSR to the base station at the uplink SPS period point by means of an uploaded service data packet.

10. A sending method, comprising:
initiating, by a terminal, an uplink Scheduling Request (SR) to a base station after uplink Semi-Persistence Scheduling (SPS) is activated; and
sending, by the terminal, a Buffer Status Reporting (BSR) of the terminal to the base station at an uplink SPS period point.

11. The method as claimed in claim 10, further comprising:
sending, by the terminal, the BSR of the terminal to the base station by means of a resource configured for the terminal by the base station in response to the uplink SR after the uplink SPS is de-activated.

12. The method as claimed in claim 10 or 11, wherein sending, by the terminal, the BSR of the terminal to the base station at the uplink SPS period point comprises:
sending, by the terminal, the BSR to the base station at the uplink SPS period point by means of an uploaded service data packet.

13. A scheduling method, comprising:
initiating, by a terminal, an uplink Scheduling Request (SR) to a base station after uplink Semi-Persistence Scheduling (SPS) is activated;
refusing, by the base station, to respond to the uplink SR initiated by the terminal;
sending, by the terminal, a Buffer Status Reporting (BSR) of the terminal to the base station at an uplink SPS period point; and
acquiring, by the base station, the BSR sent by the terminal, and dynamically scheduling a service of the terminal according to the acquired BSR.

14. The method as claimed in claim 13, further comprising:
restoring, by the base station, to respond to the uplink SR initiated by the terminal after uplink SPS is de-activated, and configuring a resource for the terminal;
sending, by the terminal, the BSR of the terminal to the base station by means of the resource; and
dynamically scheduling, by the base station, the service of the terminal according to the BSR sent by the terminal by means of the resource.

15. The method as claimed in claim 13 or 14, wherein sending, by the terminal, the BSR of the terminal to the base station at the uplink SPS period point comprises:
sending, by the terminal, the BSR of the terminal to the base station by means of a service data packet uploaded at the uplink SPS period point.

16. A scheduling method, comprising:
stopping, by a terminal, initiating an uplink Scheduling Request (SR) to a base station after uplink Semi-Persistence Scheduling (SPS) is activated;
sending, by the terminal, a Buffer Status Reporting (BSR) of the terminal to the base station at an uplink SPS period point; and
acquiring, by the base station, the BSR sent by the terminal, and dynamically scheduling a service of the terminal according to the acquired BSR.

17. The method as claimed in claim 16, further comprising:
restoring, by the terminal, to initiate the uplink SR to the base station after the uplink SPS is de-activated;
responding, by the base station, to the uplink SR, and configuring a resource for the terminal;
sending, by the terminal, the BSR of the terminal to the base station by means of the resource; and
dynamically scheduling, by the base station, the service of the terminal according to the BSR sent by the terminal by means of the resource.

18. The method as claimed in claim 16 or 17, wherein sending, by the terminal, the BSR of the terminal to the base station at the uplink SPS period point comprises:
sending, by the terminal, the BSR of the terminal to the base station by means of a service data packet uploaded at the uplink SPS period point.

19. A base station, comprising: a request response component, an information acquisition component and a scheduling component, wherein
the request response component is configured to refuse, after uplink Semi-Persistence Scheduling (SPS) is activated, to respond to an uplink Scheduling Request (SR) initiated by a terminal;
the information acquisition component is configured to acquire a Buffer Status Reporting (BSR) sent by the terminal at an uplink SPS period point; and
the scheduling component is configured to dynamically schedule, according to the BSR, a service of the terminal.

20. The base station as claimed in claim 19, wherein the request response component is further configured to restore, after the uplink SPS is de-activated, to respond to the uplink SR initiated by the terminal, and configure a resource for the terminal;
the information acquisition component is further configured to acquire a BSR sent by the terminal by means of the resource; and
the scheduling component is further configured to dynamically schedule, according to the BSR sent by the terminal by means of the resource, the service of the terminal.

21. The base station as claimed in claim 19 or 20, wherein the information acquisition component is configured to acquire the BSR by means of a service data packet uploaded by the terminal at the uplink SPS period point.

22. A base station, comprising: an information acquisition component and a scheduling component, wherein
the information acquisition component is configured to acquire, after uplink Semi-Persistence Scheduling (SPS) is activated, a Buffer Status Reporting (BSR) sent by a terminal at an uplink SPS period point; and
the scheduling component is configured to dynamically schedule, according to the BSR, a service of the terminal.

23. The base station as claimed in claim 22, further comprising: a request response component, wherein
the request response component is configured to respond, after the uplink SPS is de-activated, to an uplink Scheduling Request (SR) initiated by the terminal, and configure a resource for the terminal;
the information acquisition component is further configured to acquire the BSR sent by the terminal by means of the resource; and
the scheduling component is further configured to dynamically schedule, according to the BSR sent by the terminal by means of the resource, the service of the terminal.

24. The base station as claimed in claim 22 or 23, wherein the information acquisition component is configured to acquire the BSR by means of a service data packet uploaded by the terminal at the uplink SPS period point.

25. A terminal, comprising: a request component and an information sending component, wherein
the request component is configured to stop, after uplink Semi-Persistence Scheduling (SPS) is activated, initiating an uplink Scheduling Request (SR) to a base station; and
the information sending component is configured to send a Buffer Status Reporting (BSR) of the terminal to the base station at an uplink SPS period point.

26. The terminal as claimed in claim 25, wherein the request component is further configured to restore, after the uplink SPS is de-activated, to initiate the uplink SR to the base station; and
the information sending component is further configured to send the BSR of the terminal to the base station by means of a resource configured for the terminal by the base station in response to the uplink SR.

27. The terminal as claimed in claim 25 or 26, wherein the information sending component is configured to send the BSR to the base station at the uplink SPS period point by means of an uploaded service data packet.

28. A terminal, comprising: a request component and an information sending component, wherein
the request component is configured to initiate, after uplink Semi-Persistence Scheduling (SPS) is activated, an uplink Scheduling Request (SR) to a base station; and
the information sending component is configured to send a Buffer Status Reporting (BSR) of the terminal to the base station at an uplink SPS period point.

29. The terminal as claimed in claim 28, wherein the information sending component is further configured to send, after the uplink SPS is de-activated, the BSR of the terminal to the base station by means of a resource configured for the terminal by the base station in response to the uplink SR.

30. The terminal as claimed in claim 28 or 29, wherein the information sending component is configured to send the BSR to the base station at the uplink SPS period point by means of an uploaded service data packet.

31. A scheduling system, comprising a terminal and a base station, wherein
the terminal comprises: a request component and an information sending component;
the base station comprises: a request response component, an information acquisition component and a scheduling component;
the request component is configured to initiate, after uplink Semi-Persistence Scheduling (SPS) is activated, an uplink Scheduling Request (SR) to the base station;
the request response component is configured to refuse to respond to the uplink SR initiated by the terminal;
the information sending component is configured to send a Buffer Status Reporting (BSR) of the terminal to the base station at an uplink SPS period point;
the information acquisition component is configured to acquire the BSR sent by the terminal; and
the scheduling component is configured to dynamically schedule, according to the acquired BSR, a service of the terminal.

32. The system as claimed in claim 31, wherein
the request response component is further configured to restore, after uplink SPS is de-activated, to respond to the uplink SR initiated by the terminal, and configure a resource for the terminal; and
the information sending component is further configured to send the BSR of the terminal to the base station by means of the resource.

33. The system as claimed in claim 31 or 32, wherein the information sending component is configured to send the BSR of the terminal to the base station by means of a service data packet uploaded at the uplink SPS period point.

34. A scheduling system, comprising a terminal and a base station, wherein
the terminal comprises: a request component and an information sending component;
the base station comprises: an information acquisition component and a scheduling component;
the request component is configured to stop, after uplink Semi-Persistence Scheduling (SPS) is activated, initiating an uplink Scheduling Request (SR) to a base station;
the information sending component is configured to send a Buffer Status Reporting (BSR) of the terminal to the base station at an uplink SPS period point;
the information acquisition component is configured to acquire the BSR sent by the terminal; and
the scheduling component is configured to dynamically schedule, according to the acquired BSR, a service of the terminal.

35. The system as claimed in claim 34, wherein the base station further comprises: a request response component,
the request component being further configured to restore, after the uplink SPS is de-activated, to initiate the uplink SR to the base station,
the request response component being configured to respond to the uplink SR, and configure a resource for the terminal,
the information sending component being further configured to send the BSR of the terminal to the base station by means of the resource.

36. The scheduling system as claimed in claim 34 or 35, wherein the information sending component is configured to send the BSR of the terminal to the base station by means of a service data packet uploaded at the uplink SPS period point.
